Europäisches Patentamt

European Patent Office

Office européen des brevets

(19)

(11) Numéro de publication: **0 187 086**
**B1**

(12) **FASCICULE DE BREVET EUROPEEN**

(45) Date de publication du fascicule du brevet: **27.06.90**

(51) Int. Cl.⁵: **G 01 S 17/74**, G 01 S 13/78

(21) Numéro de dépôt: **85402453.6**

(22) Date de dépôt: **10.12.85**

(54) **Procédé d'interrogation ami-ennemi, et système utilisant ce procédé.**

(30) Priorité: **14.12.84 FR 8419197**

(43) Date de publication de la demande:
**09.07.86 Bulletin 86/28**

(45) Mention de la délivrance du brevet:
**27.06.90 Bulletin 90/26**

(84) Etats contractants désignés:
**DE GB IT**

(56) Documents cités:
**DE-A-3 113 154**

(73) Titulaire: **THOMSON-CSF**
**51, Esplanade du Général de Gaulle**
**F-92800 Puteaux (FR)**

(72) Inventeur: **Robin, Léon**
**THOMSON-CSF SCPI 173, bld. Haussmann**
**F-75379 Paris Cedex 08 (FR)**
Inventeur: **Roger, Dominique**
**THOMSON-CSF SCPI 173, bld. Haussmann**
**F-75379 Paris Cedex 08 (FR)**

(74) Mandataire: **Albert, Claude et al**
**THOMSON-CSF SCPI**
**F-92045 PARIS LA DEFENSE CEDEX 67 (FR)**

EP 0 187 086 B1

## Description

L'invention concerne l'interrogation ami-ennemi pour l'établissement de liaisons de radio communication ou l'identification d'un système extérieur, généralement un véhicule ou un aéronef. On utilise de préférence la modulation d'une onde lumineuse telle que le rayon laser, ce qui confère à la liaison un haut degré de discrètion et de protection contre les brouillages.

Il est connu d'utiliser la modulation d'ondes lumineuses pour transmettre des informations numériques ou établir des liaisons ami-ennemi encore appelées IFF (de l'appellation anglo-saxonne Identification of Friend and Foe).

La liaison complète IFF exige un interrogateur et un répondeur, et s'établit à l'aide d'un mot clé. De manière générale, on utilise dans l'interrogateur un générateur laser pour produire une première onde lumineuse. Cette onde peut être modulée soit en fréquence, soit en amplitude. La modulation de fréquence s'effectue de part et d'autre valeur moyenne F, la modulation d'amplitude s'effectue par la présence ou l'absence d'impulsions. A cet effet, un modulateur émetteur laser reçoit d'un circuit de commande et de codage un signal de modulation traduisant le code ou le mot clé à transmettre. Au niveau du répondeur, le même circuit de commande et de codage est utilisé pour coder un mot clé de surveillance. Un récepteur laser et un démodulateur fournissent à un circuit de corrélation le mot clé reçu pour le comparer au mot clé du répondeur. En fonction de cette comparaison le mot clé est validé ou non. Le résultat de cette comparaison est communiqué à l'interrogateur, par exemple par radio, pour établir la communication définitive.

La modulation d'amplitude a toujours été la plus utilisée, car facile à mettre en oeuvre. Mais elle présente deux inconvénients majeurs. La premier est l'ambiguïté de décision, consécutive par exemple à de fortes fluctuations de l'amplitude. Une amplitude d'impulsion insuffisante peut être assimilée par erreur à un zéro. La second inconvénient est la faible capacité d'information des messages correspondants. Ce dernier point est particulièrement important dans un liaison IFF où la durée du message doit être courte. La modulation de fréquence consiste à émettre deux ou plusieurs fréquences de récurrences caractérisant une structure de codage. Mais pour un laser de longueur d'onde égale à 1,06 microns, le nombre de récurrences est limité. La capacité du message reste donc faible.

D'autre part, dans certaines applications, les mesures de sécurité imposées sont telles que ces techniques de transmission et les moyens de codage utilisés ne permettent pas d'assurer un taux de discrétion suffisant.

Il est également connu du document DE—A—3 113 154 d'utiliser une modulation dite de position, MP, ou PPM (selon l'appellation anglo-saxonne Pulse Position Modulation).

Le but de l'invention est d'élaborer un système d'interrogation ami-ennemi utilisant la modulation de position et réduisant de façon notable les risques d'interception et de décodage du mot clé.

Une particularité de l'invention consiste à mettre en oeuvre un procédé de codage utilisant un code cyclique et de décodage par corrélation du mot clé sans impulsion fixe de référence.

On se propose également pour le répondeur d'une part, de tenir compte des impulsions parasites, d'autre part, de ne pas attendre la fin de la réception du mot clé pour effectuer le décodage afin de réduire le temps de l'interrogation.

La présente invention a pour objet un procédé d'interrogation ami-ennemi, par transmission d'une onde modulée entre un ensemble interrogateur et un ensemble répondeur, et un système utilisant ce procédé, tels que définis dans les revendications.

Les particularités et avantages de l'invention seront mieux compris à la lecture de la description qui suit, donnée à titre d'exemple, et illustrée des figures qui y représentent:

Figure 1, un diagramme générale de l'ensemble interrogateur-répondeur du système selon l'invention;

Figure 2, un tronçon de signal de modulation de position;

Figure 3, un mode de réalisation de l'ensemble de transcodage du système conforme à l'invention;

Figure 4, un mode de réalisation des circuits de réception, de corrélation et de validation du répondeur du système;

Figures 5a et 5b, des formes de signaux relatifs à un premier procédé de corrélation du répondeur du système;

Figures 6a à 6e, des formes de signaux relatifs à un deuxième procédé de corrélation du répondeur du système;

Figure 7, un ordinogramme d'un déroulement préférentiel du procédé de corrélation utilisé dans l'ensemble répondeur.

Dans la description, le procédé d'interrogation sera décrit en parallèle avec le système.

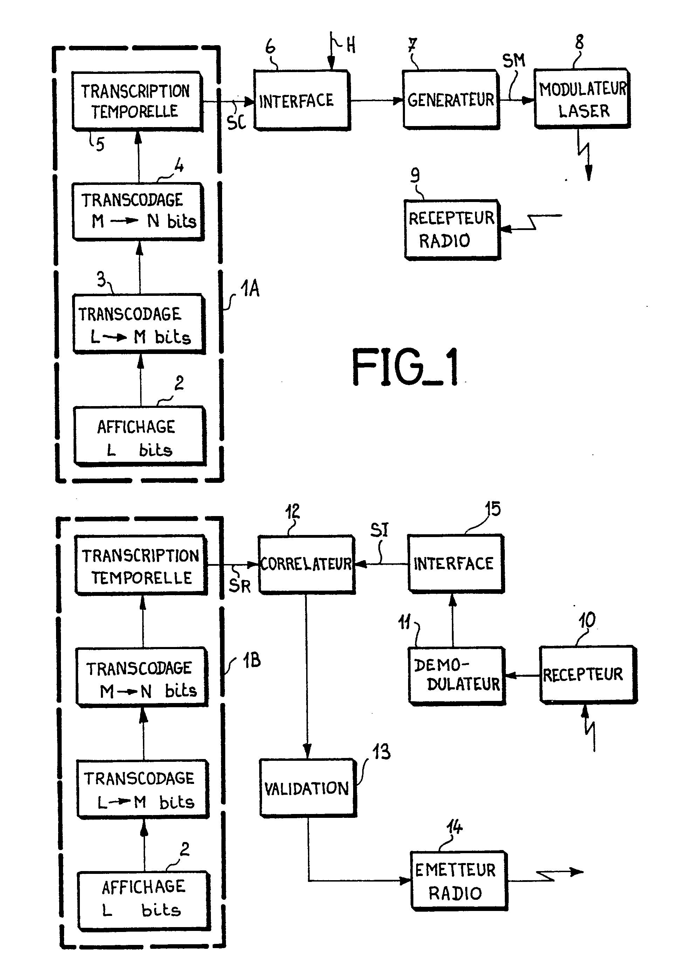

Le système d'interrogation ami-ennemi comporte un ensemble interrogateur et un ensemble répondeur (fig. 1). Aussi bien dans l'ensemble interrogateur que dans l'ensemble répondeur, on utilise un même ensemble de codage 1A ou 1B. Il sert, dans le case de l'interrogateur à commander l'émission d'un mot clé codé, et pour le répondeur à coder le mot clé de référence pour comparer ce dernier aux divers messages reçus, en l'occurence un mot codé émis.

Le signal élaboré par l'ensemble de codage 1A de l'interrogateur représente un mot clé codé et est appelé signal de commande SC. Il est appliqué par l'intermédiaire d'un interface 6 à un générateur 7 qui élabore un signal de modulation SM à partir du signal SC et qui commande un sous-ensemble modulateur-émetteur 8. Ce dernier, par modulation d'une onde lumineuse et plus particulièrement d'une onde laser, émet le mot codé. Une partie réceptrice 9, qui peut être un récepteur radio, peut être utilisée pour recevoir ensuite un message de bonne réception émis de la part du répondeur.

Le signal élaboré par l'ensemble de codage 1B du répondeur représente un mot local et est appelé signal de référence SR. Il est appliqué à un circuit de corrélation 12. Un récepteur 10, compatible avec l'émetteur 8, reçoit le mot codé. Un démodulateur 11 reçoit la sortie du récepteur 10 et transmet le mot reçu démodulé par l'intermédiaire d'un interface 15 au circuit de corrélation 12. Ce dernier comprend des circuits de traitement qui comparent le signal de référence SR avec la sortie SI de l'interface 15 qui délivre les messages reçus et théoriquement le mot clé émis par l'interrogateur. Un circuit de validation 13 reçoit le résultat de la corrélation et détermine en fonction des critères prédéterminés si le mot reçu doit être validé ou non. Une partie émettrice 14, par exemple un émetteur radio commandé par la validation, peut être utilisée pour envoyer un message réponse à l'interrogateur et éventuellement établir la communication définitive entre les deux postes.

Le principe des ensembles de transcodage 1A et 1B est le suivant: à partir d'un mot significatif représenté en octal par le mot clé, on effectue un transcodage permettant d'obtenir une séquence binaire présentant une entropie élevée donc, pour les systèmes étrangers à la communication, un grand degré d'incertitude quant à sa détection. Le code est choisi linéaire et cyclique, c'est-à-dire qu'à chaque mot d'un nombre M de bits on ajoute une séquence supplémentaire de K bits, de sorte que le mot final émis comporte un nombre N de bits différent tel que N=M+K, ceci dans le but d'obtenir une redondance suffisante.

UN dispositif d'affichage 2 permet à l'opérateur d'afficher le mot clé d'un nombre initial L de bits, et à coder ce mot en binaire. L'affichage peut être effectué par des roues codeuses définissant un mot octal. Des moyens de transcodage 3 et 4, recevant la sortie du dispositif d'affichage, transforment ce mot initial de L bits en un mot final de N bits qui permet d'élaborer le signal de commande SC. Ces moyens de transcodage se partagent en deux circuits de transcodage. Un premier circuit de transcodage 3, dit aléatoire, transforme le mot à coder de L bits en un mot de M bits. Ce circuit a pour but de rendre cohérent le mot avec le codage utilisé. Un deuxième circuit de transcodage 4, dit linéaire, effectue le codage proprement dit du mot de M bits en un mot de N bits selon le code utilisé. Ce circuit met en oeuvre un code linéaire cyclique pour la transmission de données. On utilise de préférence le code de Golay qui transcrit un mot de 12 bits (M) en un mot de 23 bits (N) et dont on peut trouver une explication détaillée dans l'ouvrage de Peterson et Weldon "Error Correcting Codes". Un vingt quatrième bit est rajouté afin de simplifier la correspondence entre le codage en position, exposé plus loin, et le code binaire.

Une particularité de l'invention étant l'utilisation de la modulation de position par position discrète, on utilise un circuit de transcription temporelle 5 qui reçoit le mot de 24 bits et calcule les D dates ($T_1$ à $T_D$) établies par rapport à la date $T_0$ de la première impulsion. Il délivre le signal de commande SC qui est numérique et qui représente ces dates.

Dans l'interrogateur, le circuit d'interface de commande 6, par exemple un compteur programmable, reçoit un signal d'horloge H, et le signal de commande SC issu du circuit de transcription temporelle 5 traduisant les D dates caractéristiques du mot clé codé. Il transforme ce signal de commande SC en un signal de modulation SM.

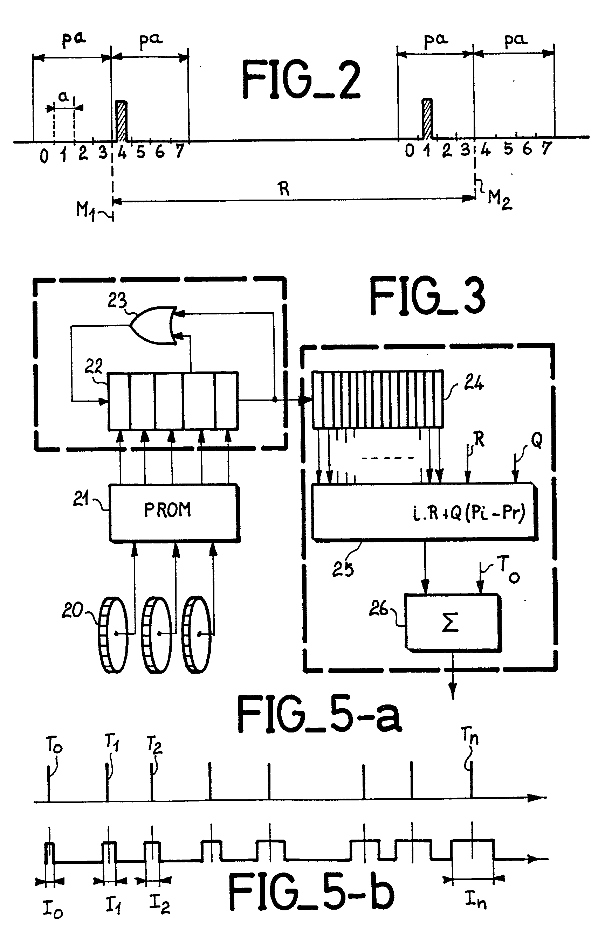

En référence à la figure 2, le principe de cette modulation de position est le suivant. La position de chaque impulsion est repérée à chaque récurrence par rapport à une position moyenne ($M_1$, $M_2$). Ce repérage s'effectue à l'interieur de 2.P intervalles situés de part et d'autre de la position moyenne. Chacun des intervalles est codé, ce qui permet de leur faire correspondre 2.P symboles pour chaque récurrence. Il est donc possible de coder chaque position, en lui affectant, soit l'un des 2.P symboles, soit le nombre binaire correspondant. Par exemple, si P=4, le nombre de symboles est 2.P=8 respectivement notés 1, 2, . . . 8, et l'équivalent binaire peut s'exprimer avec 3 bits ($2^3$). Le codage binaire optimal suppose que P soit une puissance de 2.

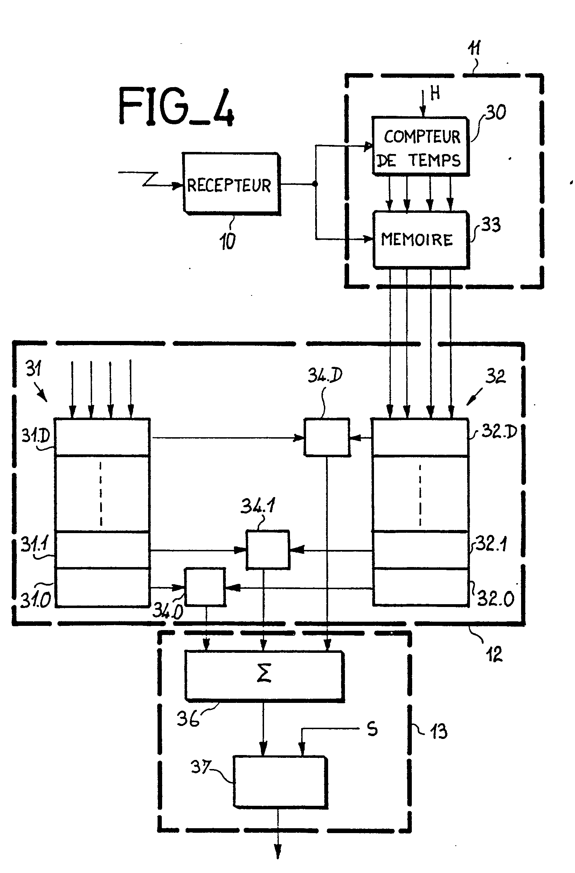

Sur la figure 3, Q représente le quantum, c'est-à-dire l'intervalle de temps séparant les différentes positions de modulation possibles les unes des autres. Si chaque position est repérée par 2.P symboles et que le message utile occupe D impulsions, la capacité de codage, c'est-à-dire la longueur du message est égale à $(2.P)^D$ ou $B^D$ bits, B étant tel que $2.P=2^B$. La capacité de codage est donc de $2^{B.D}$ et on a l'égalité: $(2.P)^D=2^{B.D}$.

Les positions moyennes sont séparées les unes des autres d'un intervalle de récurrence R. Les contraintes imposées sur le message IFF sont principalement la faible valeur du temps d'acquisition et la fiabilité de la liaison. Celle-cit est augmentée si l'on emploie un code détecteur ou correcteur d'erreurs dont la mise en oeuvre est relativement aisée, ceci afin de réduire le volume et le temps de calcul. Le choix du codage, en l'occurrence le code de Golay, est donc un compromis entre une structure de longueur suffisante pour utiliser le plus grand nombre de mots clé différents, et un temps d'acquisition le plus court possible. Par contre, pour simplifier la description, le nombre de positions de modulation est huit, le nombre d'impulsions utiles D par mot codé est quatre, plus une impulsion de référence.

La réalisation de l'ensemble de codage représenté sur la figure 3 est un exemple. Il illustre les différents opérations effectuées dans ce système. Une réalisation avec microprocesseur peut être envisagée pour effectuer les différents calculs.

Le dispositif d'affichage est réalisé par trois roues codeuses 20 à huit positions chacune. Ceci donne la possibilité d'afficher $8^3=512$ combinaisons, soit 512 mots clé codés possibles. Le circuit de transcodage aléatoire est une mémoire morte programmable 21 qui fait correspondre à chaque mot clé de L=9 bits ($2^9$=512) un mot de M=12 bits, auquel on peut appliquer le codage choisi. Le circuit de transcodage linéaire 4 effectue un calcul qui revient à multiplier le mot de 12 bits par une matrice à douze lignes et vingt quatre colonnes caractéristique du code pour obtenir un mot de N=24 bits. Ce calcul peut être réalisé par un premier registre à décalage 22, fonctionnant dans un premier temps, avec entrées parallèles issues de la mémoire morte 21 et sortie série, ce qui fournit les douze premiers bits du code. Dans un deuxième temps, par rebouclage d'un certain nombre de sorties parallèles à travers un réseau OU exclusif 23 sur l'entrée série, la sortie du registre fournit les douze bits suivants.

Le circuit de transcription temporelle 5 effectue le calcul de chacune des dates $T_1$ à $T_D$, par rapport à l'impulsion de référence $T_0$, qui a pour expression:

$$T_i = i.R + Q(P_i - P_r)$$

où i est le numéro de récurrence ou de l'impulsion (1 à D=4), R est la valeur de l'intervalle de récurrence, Q le quantum, $P_i$ le symbole de la position de modulation i et $P_r$ le symbole de la position de référence. Les valeurs R et Q sont fixées à l'avance en fonction du codage, de la technologie employé et de la longueur d'onde du laser. Il peut utiliser un deuxième registre à décalage 24 recevant en série la sortie du premier registre 22. Il délivre en parallèle les 24 bits qui sont pris en compte trois par trois par un circuit de calcul 25 qui effectue le calcul de $T_i$. Un sommateur 26 est alors utilisé pour ajouter la valeur $T_0$.

En référence à la figure 4 concernant le répondeur, le démodulateur 11 peut comporter un compteur horaire cyclique 30 piloté par un signal d'horloge H identique à celui utilisé dans l'interrogateur. Ce compteur est déclenché par la première impulsion reçue et issue du récepteur laser 10. Sa sortie est connectée à une mémoire 33 dont la sortie est également commandée par le récepteur. De ce fait la sortie de la mémoire 33 fournit les dates $T'_1$, $T'_2$, ... $T'_D$ des impulsions détectées par le récepteur, et ceci par rapport à la date de la première impulsion $T_0$.

Le circuit de corrélation 12 procède numériquement. Il reçoit, sous la forme de dates, d'une part le mot clé codé de référence, et délivré par l'intermédiaire de l'ensemble de transcodage 1 du répondeur, et d'autre part le mot détecté par l'intermédiaire de l'interface 15. Le mot local affiché, théoriquement identique à celui reçu, lui parvient sous la forme des dates $T_0$, $T_1$, ... $T_D$. Ces dates sont stockées dans un premier ensemble de mémoire 31. Cet ensemble peut être constitué par plusieurs registres à décalage, un pour chaque bit, représentant les dates. La première mémoire 31.0 est constituée par la première cellule dans chacun des registres et contient la première date $T_0$. La deuxième mémoire 31.1, contient la deuxième date $T_1$, la dernière mémoire 31.D contient la dernière date $T_D$. Les D dates $T'_0$, $T'_1$,

... $T'_D$ du mot reçu sont stockées de manière analogue aux dates du mot local, dans un deuxième ensemble de mémoire 32 pouvant être constitué par plusieurs registres à décalage. Les dates $T'_0$, $T'_1$, ... $T'_D$, sont respectivement stockées dans des mémoires 32.0, 32.1, ..., 32.D analogues aux mémoires 31.0 à 31.D.

Un nombre D+1 de comparateurs, égal au nombre de dates, 34.0, 34.1, ..., 34.D, est utilisé pour comparer les contenus des ensembles de mémoire 31 et 32. Le premier comparateur 34.0 compare les contenus des deux premières mémoires 31.0 et 32.0, le second 34.1 ceux des deuxièmes mémoires 31.1 et 32.1, et ainsi de suite, le dernier 34.D ceux des dernières mémoires 31.D et 32.D. De ce fait chaque date $T_0$, $T_1$, ... $T_D$ caractérisant le mot affiché est comparée à celle $T'_0$, $T'_1$, ... $T'_D$ du même ordre des impulsions reçues. Lorsque le contenu de deux mémoires comparées sont identiques, ou considérés comme identiques, la sortie du comparateur délivre un signal égal à 1, s'ils diffèrent le signal est égal à 0.

Le circuit de validation 13 reçoit la sortie de chaque comparateur 34.0 à 34.D dans un circuit sommateur 36. La sortie de ce sommateur est connectée à l'entrée d'un comparateur à seuil 37. Si on exige la stricte identité entre le mot affiché et le mot reçu, on fixe le seuil égal au nombre D de dates du mot affiché. En affichant un seuil S de D—1 on tolère une erreur concernant la transmission du mot codé. On peut ainsi valider le mot reçu avec une probabilité compatible avec des performances requises du système. La sortie de ce comparateur à seuil 37 constitue la sortie du circuit de validation 13 et permet de commander l'émetteur 14.

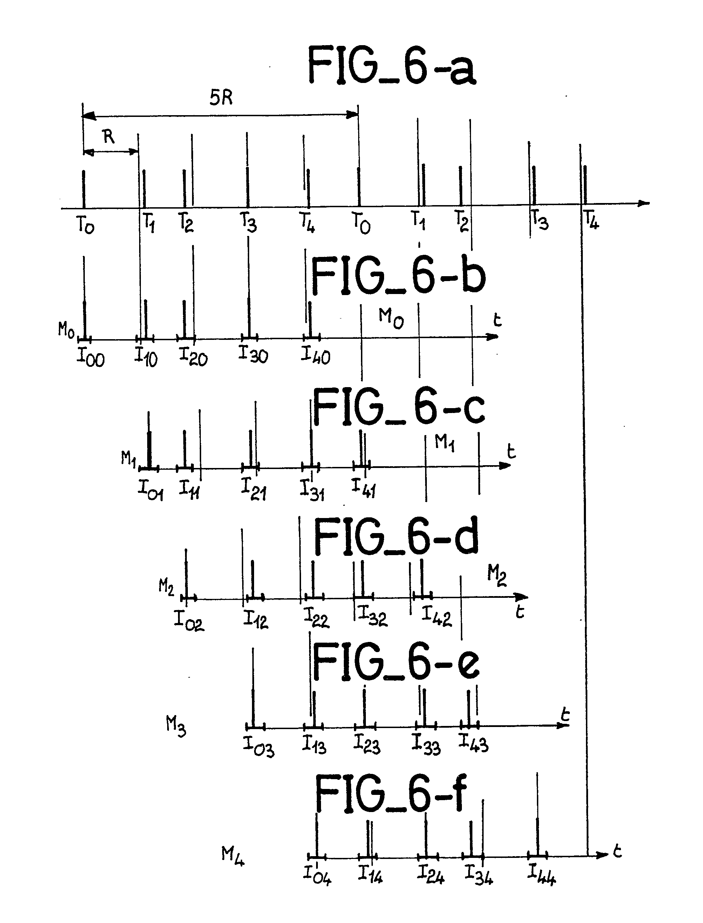

Au niveau du répondeur, l'invention prévoit un perfectionnement du processus de corrélation pour limiter le temps de reconnaissance du mot reçu et pour pallier une éventuelle instabilité de l'horloge, aussi bien dans l'interrogateur que dans le répondeur. On substitue aux différentes dates $T_0$ à $T_D$, des intervalles de temps $I_0$ à $I_D$ centrés autour des dates correspondantes, avec $T_i = [T_i - E_i, T_i + E_i]$. Ceci permet de tolérer une légère différence entre la date affichée $T_i$ et la date reçue $T'_i$ correspondante. Les intervalles que délivre l'ensemble de transcodage 1B du répondeur et caractérisant le mot codé de référence, peuvent être schématisés par un signal rectangulaire, représenté fig. 5b, et dont la largeur des créneaux est liée à la stabilité de l'horloge. La fig. 5a représente la schématisation des dates correspondantes par rapport aux intervalles de la fig. 5b.

Les D intervalles I constituent un tableau de 4 lignes et 2 colonnes, caractérisé par le numéro qui est celui de l'impulsion de référence. Une particularité du perfectionnement du processus proposé consiste à prendre de façon aléatoire l'une quelconque des dates $T_0$ à $T_D$ émise comme impulsion de référence. On établit un nombre D+1 de tableaux similaires dans chacun desquels sont rentrés les intervalles correspondant à chaque impulsion. L'impulsion de référence temporelle est différente pour chaque tableau. Elle caractérise le tableau $M_j$ par son numéro d'ordre j dans la séquence constituée par le mot local affiché, et chacune des autres impulsions est datée par rapport à elle, en supposant que le mot local a été répété une fois. Chaque tableau contient donc les instants minimaux et maximaux d'arrivée des impulsions à recevoir. Le tableau $M_j$ contient les intervalles $I_{1j}, I_{2j} \ldots I_{Dj}$, $I_{ij}$ étant l'intervalle $[T_{ij}-E_i, T_{ij}+E_i]$, et $T_{ij}=i.R+Q(P_{i+j})$ (modulo D—$P_j$).

Par exemple le mot local se traduisant par les quatre dates $T_1, T_2, T_3, T_4$, le tableau $M_2$ contient les intervalles $I_{12}, I_{22}, I_{32}, I_{42}$, et correspondant relativement aux dates $T_1, T_2, T_3, T_4$. Le mot a été répété une fois, les dates étant décalées en moyenne de quatre fois l'intervalle de récurrence moyenne R.

Sur la figure 6b, les intervalles sont positionnés par rapport aux impulsions correspondantes, la première date $T_0$ étant la référence. Ils constituent les intervalles du tableau $M_0$. Sur les figures 6c, 6d, 6e, 6f, figurent respectivement les intervalles des tableaux $M_1, M_2, M_3, M_4$ toujours positionnés par rapport à leurs dates correspondantes. Le mot étant répété au moins une fois, si le mot clé codé n'est reçu par l'ensemble répondeur qu'à partir de l'impulsion $T_j$, celle-ci peut être prise comme référence pour dater les suivantes. La séquence des premières dates reçues correspond à un des tableaux.

De simpulsions parasites peuvent se mêler, à la réception, aux impulsions constituant le mot reçu. Le procédé de corrélation selon l'invention peut permettre de remédier à cet inconvénient de la façon suivante. Cette possibilité ne nécessite que des mémoires et un peu de logical supplémentaires.

On effectue à partir de la première impulsion reçue une datation modulo R de toutes les impulsions reçues. Chaque impulsion est alors caractérisée par son numéro de récurrence j et par le symbole $P_i$ de sa position de modulation i relative par rapport à l'instant correspondant à la récurrence moyenne. La datation relative est comprise entre

$$-\frac{R}{2} \quad \text{et} + \frac{R}{2}.$$

On obtient ainsi un certain nombre de groupes de datations normalement égal au nombre D d'impulsions utiles reçues. Un groupe peut contenir un nombre X d'impulsions dont X—1 impulsions parasites. On prend alors la première impulsion pour origine des temps et on effectue la comparaison d'une séquence de valeurs temporelles, chacune d'elle étant prélevée dans un groupe différent. On utilise les valeurs prépositionnées des tableaux de comparaison. Après épuisement de toutes les combinaisons possibles, s'il n'y a pas eu validation, on prend alors la deuxième impulsion reçue pour origine des temps et on recommence le cycle.

Si sur deux intervalles de récurrence successifs, on obtient un résultat négatif, c'est-à-dire si la somme des valeurs de sortie du comparateur est égal à zéro, on coupe court à la poursuite du test sur cette séquence en reprenant l'impulsion qui suit. Cette procédure permet d'éviter les opérations superflues et de diminuer le temps d'acquisition.

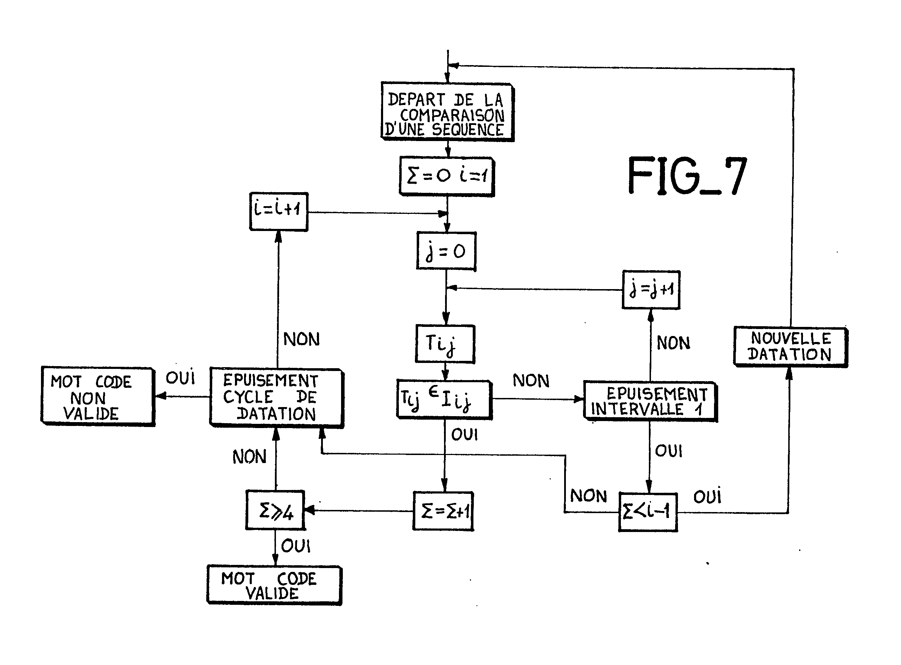

A titre d'exemple, et en référence à la figure 7, le déroulement de la corrélation est le suivant. Au départ de la comparaison de la première séquence de dates, on fixe la somme $\Sigma=0$; i=1; j=0. La première date $T_{10}$ à considérer dans la première séquence est comparée à l'intervalle $I_{10}$. Si elle appartient à cet intervalle, on incrémente la somme $\Sigma=\Sigma+1$. On incrémente alors i, et la deuxième date $T_{20}$ de la séquence est comparée à son intervalle correspondant $I_{20}$. Si la date $T_{10}$ n'appartient pas à $I_{10}$, j est incrémenté.

Lorsque l'on arrive à l'épuisement des intervalles, et que la somme est inférieure à i—1, la corrélation recommence avec une nouvelle séquence. Ceci se poursuit jusqu'à ce que la somme: $\Sigma=4$ (mot codé validé), ou, jusqu'à l'épuisement du cycle de datation des séquences (mot codé non validé).

L'ensemble de traitement des signaux assuré par les ensembles de codage, et les calculs de corrélation et validation dans le répondeur, peuvent être effectués par un système à microprocesseur.

## Revendications

1. Procédé d'interrogation ami-ennemi par transmission d'une onde modulée entre un ensemble interrogateur et un ensemble répondeur, ladite onde modulée étant porteuse d'un mot clé émis et ledit répondeur procédant par corrélation entre le mot clé reçu en réponse au mot clé émis, et au moins un mot de référence identique au mot clé émis pour valider l'interrogation, procédé caractérisé en ce que chaque mot clé émis est obtenu à partir d'un mot clé initial qui est, avant modulation, transformé en un mot clé codé sous forme numérique, puis en un mot clé transcrit composé d'un ensemble de dates d'impulsions définies par rapport à une date d'impulsion de référence pour réaliser une modulation de position d'impulsions selon des positions discrètes, et en ce que le répondeur procède par corrélation entre le mot clé reçu après démodulation et différents mots de référence transcrits dérivés d'un mot codé de référence qui est obtenu à partir du mot clé initial par des étapes de transcodage et de transcription identiques à celles réalisées dans l'interrogateur, chaque mot clé de référence transcrit étant obtenu à partir du mot codé de référence en prenant respectivement comme date d'impulsion de référence les différentes dates d'impulsions du mot codé de référence.

2. Procédé selon la revendication 1, caractérisé en ce que chaque date d'impulsion des différents mots de référence transcrits est définie par un intervalle centré autour de ladite date.

3. Procédé selon l'une des revendications 1 et 2, caractérisé en ce que le répondeur procède par corrélation suivant la revendication 1, pour différents mots clé de réception élaborés à partir du mot clé reçu en prenant respectivement comme date d'impulsion de référence les différentes dates d'impulsions du mot clé reçu.

4. Procédé selon l'une des revendications 1 à 3, caractérisé en ce que chaque corrélation comporte une opération de comparaison entre dates d'un mot clé reçu et d'un mot de référence transcrit, puis une opération de validation des résultats de comparaison en fonction d'un seuil déterminé.

5. Procédé selon l'une des revendications précédentes, caractérisé en ce que la transcodage numérique se fait suivant un code cyclique.

6. Système d'interrogation ami-ennemi mettant en oeuvre un procédé selon l'une quelconque des revendications précédentes, comportant d'une part, un ensemble interrogateur comprenant une partir émettrice composée d'un ensemble de codage (1A) élaborant le mot clé transcrit, d'un générateur (7) élaborant un signal de modulation (SM) à partir du mot clé transcrit, et d'un modulateur-émetteur (8) commandé par le signal de modulation et émettant le mot clé émis modulant ladite onde, et une partie réceptrice (9), et d'autre part, un ensemble répondeur comprenant un ensemble de codage (1B), élaborant au moins un mot de référence transcrit (SR) identique au mot clé transcrit et secerant le mot clé reçu des moyens de corrélation (12) et de validation (13) du mot clé reçu par rapport au mot de référence transcrit, et une partie émettrice (14) pour envoyer une réponse à la partie réceptrice de l'interrogateur, le système étant caractérisé en ce que lesdits ensembles de codage sont constitués d'un dispositif d'affichage du mot clé initial (2—1A), respectivement d'un mot de référence (2—1B), ayant un nombre (L) déterminé de bits, de moyens de transcodage de ce mot clé (3—1A, 4—1A), respectivement de ce mot de référence (3—1B, 4—1B), en un mot clé codé, respectivement en un mot codé de référence, ayant un nombre différent (N) de bits, à l'aide d'un code numérique, et d'un circuit de transcription temporelle dudit mot clé codé (5—1A), respectivement dudit mot codé de référence (5—1B), en un ensemble de dates d'impulsions définies par rapport à une date d'impulsion de référence, formant le mot clé transcrit, respectivement les mots de référence transcrits, chaque mot de référence transcrit ayant comme date d'impulsion de référence les différents dates d'impulsions du mot clé de référence.

7. Système selon la revendication 6, caractérisé en ce que l'onde utilisée est fournie par une source laser.

8. Système selon l'une quelconque des revendications 6 et 7, caractérisé en ce que les moyens de corrélation (12) comprennent deux ensembles de mémoires (31, 32) pour stocker respectivement les dates ($T_0$ à $T_D$) du mot de référence transcrit et ($T'_0$ à $T'_D$) du mot clé reçu, et des comparateurs (34.0 à 34.D) par comparer les dates de même rang deux à deux, des moyens de validation (13) recevant la sortie desdits comparateurs pour valider ou non le mot reçu en fonction d'un seuil déterminé.

9. Système selon la revendication 8, caractérisé en ce que chaque comparateur (34.0 à 34.D) délivre un signal égal à un si les deux dates comparées sont identiques, égal à zéro si les deux dates comparées sont différentes, le circuit de validation (13) étant constitué d'un sommateur (36) recevant la sortie de chacun desdits comparateurs et délivrant la somme des résultats de comparaison à un comparateur à seuil (37) qui valide ou non cette somme en fonction d'un seuil déterminé.

10. Système selon l'une quelconque des revendications 6 à 9, caractérisé en ce que les ensembles de codage (1A, 1B) et les moyens de corrélation (12) et de validation (13) sont réalisés sous la forme d'un système à microprocesseur.

**Patentansprüche**

1. Verfahren zur Freund-Feind-Abfrage durch übertragen einer modulierten Welle zwischen einer Abfrageeinheit und einer Respondereinheit, wobei die modulierte Welle Träger eines ausgestrahlten Schlüsselworts ist und der Responder durch Korrelation des als Antwort auf das ausgesandte Schlüsselwort empfangenen Schlüsselworts mit mindestens einem mit dem ausgesandten Schlüsselwort identischen Bezugswort zur Validierung der Abfrage vorgeht, dadurch gekennzeichnet, daß jedes ausgesandte Schlüsselwort aus einem ursprünglichen Schlüsselwort gewonnen wird, welches vor der Modulation in eine digital kodiertes Schlüsselwort und dann in ein umgeschriebenes Schlüsselwort umgesetzt wird, das aus einer Gruppe von Impulsdaten besteht, die in Bezug auf ein Bezugsimpulsdatum zur Durchführung einer Impulslagenmodulation nach diskreten Positionen definiert ist, und daß der Responder durch Korrelieren eines empfangenen und demodulierten Schlüsselworts und verschiedener umgeschriebener Bezugswörter vorgeht, welche aus einem kodierten Bezugswort gewonnen sind, das aus dem ursprünglichen Schlüsselwort durch Transkodier- und Umschreibeschritte abgeleitet wird, welche mit den in der Abfrageeinheit durchgeführten Schritten übereinstimmen, wobei jedes umgeschriebene Bezugsschlüsselwort aus dem kodierten Bezugswort durch Verwenden der verschiedenen Impulsdaten des kodierten Bezugsworts als Bezugsimpulsdatum gewonnen wird.

2. Verfahren nach Anspruch 1, dadurch gekennzeichnet, daß jede Impulsdatum der verschiedenen umgeschriebenen Bezugsworte durch ein um das genannte Datum zentriertes Intervall definiert ist.

3. Verfahren nach Anspruch 1 oder 2, dadurch gekennzeichnet, daß der Responder bei verschiedenen aus dem empfangenen Schlüsselwort erzeugten Empfangsschlüsselwörtern durch Korrelieren gemäß Anspruch 1 vorgeht, indem er als Referenzimpulsdatum eines der verschiedenen Impulsdaten des empfangenen Schlüsselworts verwendet.

4. Verfahren nach einem der Ansprüche 1 bis 3, dadurch gekennzeichnet, daß jeder Korrelationsvorgang eine Vergleichsoperation zwischen Daten eines empfangenen Schlüsselworts und einem umgeschriebenen Bezugswort und anschließend eine Validierungsoperation der Vergleichsergebnisse in Abhängigkeit von einem bestimmten Schwellenwert umfaßt.

5. Verfahren nach einem der vorhergehenden Ansprüche, dadurch gekennzeichnet, daß jede digitale Transkodierung nach einem zyklischen Kode erfolgt.

6. Freund-Feind-Abfragesystem zur Durchführung des Verfahrens nach einem der vorhergehenden Ansprüche, das zum einen eine Abfrageeinheit mit einem Sendeteil aufweist, das aus einer Kodiergruppe (1A) zum Erzeugen des umgeschriebenen Schlüsselworts, einem Generator (7) zum Erzeugen eines Modulationssignals (SM) aus dem umgeschriebenen Schlüsselwort, aus einer Modulator-Sender-Kombination (8), die vom Modulationssignal gesteuert wird und das ausgesandte, die genannte Welle modulierende Schlüsselwort aussendet, und aus einem Empfangsteil (9) besteht, und das zum anderen eine Respondereinheit mit einer das empfangene Schlüsselwort empfangenden Kodiergruppe (1B) zum Erzeugen mindestens eines umgeschriebenen Bezugsworts (SR) identisch dem umgeschriebenen Schlüsselwort, Mittel zum Korrelieren (12) und Validieren (13) des empfangenen Schlüsselworts in Bezug auf das umgeschriebene Bezugswort, und ein Sendeteil (14) zum übertragen einer Antwort an das Empfangsteil der Abfrageeinheit aufweist, dadurch gekennzeichnet, daß die Kodiergruppen von einer Einrichtung zur Anzeige des ursprünglichen Schlüsselworts (2—1A) bzw. ein Bezugswort (2—1B) mit einer bestimmten Bitanzahl (L), von Mitteln zum Transkodieren dieses Schlüsselworts (3—1A, 4—1A) bzw. dieses Bezugsworts (3—1B, 4—1B) in win kodiertes Schlüsselwort bzw. ein Bezugswort mit abweichender Bitanzahl (N) mit Hilfe eines digitalen Schlüssels, und von einer Schaltung zur zeitlichen Umschreibung des kodierten Schlüsselworts (5—1A) bzw. des kodierten Bezugswortes (5—1B) in eine Gruppe von Impulsdaten gebildet werden, die in Bezug auf ein Bezugsimpulsdatum definiert sind, wobei diese Schaltung das umgeschriebenen Schlüsselwort bzw. die umgeschriebenen Bezugswörter bildet und jedes umgeschriebene Bezugswort als Bezugsimpulsdatum die verschiedenen Impulsdaten des kodierten Bezugswortes besitzt.

7. System nach Anspruch 6, dadurch gekennzeichnet, daß die verwendete Welle von einer Laserquelle geliefert wird.

8. System nach Anspruch 6 oder 7, dadurch gekennzeichnet, daß die Korrelationsmittel (12) zwei Speichergruppen (31, 32) zum Speichern der Daten ($T_0$ bis $T_D$) des umgeschriebenen Bezugsworts bzw. der Daten ($T'_0$ bis $T'_D$) des empfangenen Schlüsselworts, sowie Komparatoren (34.0 bis 34.D) zum paarweisen Vergleichen der Daten gleichen Rangs aufweist, wobei Validierungsmittel (13) die Ausgangssignale der Komparatoren empfangen, um das empfangene Wort in Abhängigkeit von einem bestimmten Schwellenwert als gültig oder ungültig zu qualifizieren.

9. System nach Anspruch 8, dadurch gekennzeichnet, daß jeder Komparator (34.0 bis 34.D) ein Signal mit Wert 1, wenn die beiden verglichenen Daten übereinstimmen, bzw. mit Wert 0 liefert, wenn sich die verglichenen Daten unterscheiden, wobei die Validierungsschaltung (13) aus einem Addierer (36) besteht, der das Ausgangssignal jedes der Komparatoren empfängt und die Summe der Vergleichsergebnisse an einen Schwellenkomparator (37) liefert, welcher die Summe in Abhängigkeit von einem bestimmten Schwellenwert als gültig oder ungültig qualifiziert.

10. System nach einem beliebigen der Ansprüche 6 bis 9, dadurch gekennzeichnet, daß die Kodiergruppen (1A, 1B) sowie die Korrelationsmittel (12) und die Validierungsmittel (13) als ein Mikroprozessorsystem ausgebildet sind.

**Claims**

1. A method for friend-or-foe interrogation by way of transmitting a modulated wave between an interrogator assembly and a responder assembly, said modulated wave being carrier of a transmitted key word and said responder proceeding by way of correlation between a received key word in reply to the transmitted key word and at least one reference word identical to the transmitted key word, in order to validate the interrogation, said method being characterized in that each transmitted key word is obtained from an initial key word which is, prior to modulation, transformed into a key word encoded in digital form, then transformed into a transcribed key word, which is composed of an assembly of pulse dates defined in relation to a reference pulse date, in order to implement a pulse position modulation according to discrete positions, and in that the responder proceeds by correlation between the received and demodulated key word and different transcribed reference words derived from an encoded reference word which is obtained from the initial key word by way of transcoding and transcription steps identical to those carried out in the interrogator, each transcribed reference key word being obtained from the encoded reference word in taking as reference pulse date the different pulse dates of the encoded reference word, respectively.

2. A method according to claim 1, characterized in that each pulse date of the different transcribed reference words is defined by an interval centered about said date.

3. A method according to claim 1 or 2, characterized in that the responder proceeds by correlation according to claim 1 as to different reception key words generated from the received key word, in taking as reference pulse date the different pulse dates of the received key word.

4. A method according to any one of claims 1 to 3, characterized in that each correlation comprises an operation of comparison between dates of a received key word and a transcribed reference word, and then an operation of validation of the results of comparison, as a function of a predetermined threshold.

5. A method according to any one of the preceding claims, characterized in that the digital transcoding is carried out in accordance with a cyclic code.

6. A friend-or-foe interrogation system, adapted to implement a method according to any one of the preceding claims, comprising, firstly, an interrogator assembly including a transmitter part, constituted of an encoding assembly (1A) adapted to generate the transcribed key word, a generator (7) adapted to generate a modulation signal (SM) from the transcribed key word and a modulator-transmitter group (8) driven by the modulation signal and transmitting the transmitted key word as a modulation of said wave, and a receiver part (9), and, secondly, a responder assembly comprising an encoding assembly (1B), adapted to generate at least one transcribed reference word (SR) identical to the transcribed key word and receiving the received key word, correlation means (12) and validation means (13) of the received key word in relation to the transcribed reference word, and a receiver part (14) for sending a reply to the receiver part of the interrogator, said system being characterized in that said encoding assemblies are constituted of means for displaying the initial key word (2—1A), respectively a key reference word (2—1B), said words having a predetermined number (L) of bits, of means for transcoding said key word (3—1A, 4—1A) or said reference word (3—1B, 4—1B) respectively into an encoded key word, or into an encoded reference word respectively, these words having a different number (N) of bits, by means of a digital code, and of a circuit for the temporal transition of said encoded key word (5—1A), or said encoded reference word (5—1B) respectively into an assembly of pulse dates defined in relation to a reference pulse date forming the transcribed key word or the transcribed reference words respectively, each transcribed reference word having as reference pulse rate the different pulse dates of the encoded reference word.

7. A system according to claim 6, characterized in that the used wave is delivered by a laser source.

8. A system according to claim 6 or 7, characterized in that the correlation means (12) comprise two sets of memories (31, 32) for storing respectively the dates ($T_0$ to $T_D$) of the transcribed reference word and ($T'_0$ to $T'_D$) of the received key word, and comparators (34.0 to 34.D) for comparing the dates having pairwise the same rank, validation means (13) receiving the output of said comparators in order to validate or not the received word as a function of a predetermined threshold.

9. A system according to claim 8, characterized in that each comparator (34.0 to 34.D) delivers a signal equal to one, if the two compared dates are identical, and equal to zero, if the two compared dates are different, the validation circuit (13) being constituted of an adder (36) receiving the output of each of said comparators and delivering the sum of the results of comparison to a threshold comparator (37) which validates or not said sum as a function of a predetermined threshold.

10. A system according to any one of claims 6 to 9, characterized in that the encoding assemblies (1A, 1B) and the correlation means (12) and the validation means (13) are implemented by a microprocessor system.

FIG_1

# FIG_2

# FIG_3

# FIG_5-a

# FIG_5-b

EP 0 187 086 B1

# FIG_4

# FIG_6-a

5R

R

$T_0$  $T_1$  $T_2$  $T_3$  $T_4$  $T_0$  $T_1$  $T_2$  $T_3$  $T_4$

# FIG_6-b

$M_0$

$M_0$

t

$I_{00}$  $I_{10}$  $I_{20}$  $I_{30}$  $I_{40}$

# FIG_6-c

$M_1$

$M_1$

t

$I_{01}$  $I_{11}$  $I_{21}$  $I_{31}$  $I_{41}$

# FIG_6-d

$M_2$

$M_2$

t

$I_{02}$  $I_{12}$  $I_{22}$  $I_{32}$  $I_{42}$

# FIG_6-e

$M_3$

t

$I_{03}$  $I_{13}$  $I_{23}$  $I_{33}$  $I_{43}$

# FIG_6-f

$M_4$

t

$I_{04}$  $I_{14}$  $I_{24}$  $I_{34}$  $I_{44}$

FIG_7